# EUROPÄISCHE PATENTSCHRIFT

(11) **EP 4 536 998 B1**
(45) Veröffentlichungstag und Bekanntmachung des Hinweises auf die Patenterteilung: **04.11.2026**
(21) Anmeldenummer: 23731212.9
(22) Anmeldetag: 06.06.2023
(51) Int. Cl.: F16K 17/16, F16K 37/00, G01L 19/08

(54) **SICHERHEITSVORRICHTUNG**
SAFETY DEVICE
DISPOSITIF DE SÉCURITÉ

(30) Priorität: 10.06.2022 DE 102022002089
(43) Veröffentlichungstag der Anmeldung: 16.04.2025
(73) Patentinhaber: Hydac Technology GmbH, 66280 Sulzbach (DE)
(72) Erfinder: KLOFT, Peter, 56235 Ransbach-Baumbach (DE); KÖHNE, Jens Holger, 66123 Saarbrücken (DE); KUSSEROW, Torsten, 54340 Thörnich (DE)
(74) Vertreter: Bartels und Partner, Patentanwälte
(86) Internationale Anmeldenummer: PCT/EP2023/065067
(87) Internationale Veröffentlichungsnummer: WO 2023/237524

(56) Entgegenhaltungen:
- BE-A3- 1 007 786
- CN-Y- 201 297 248
- DE-A1- 102015 014 797
- DE-A1- 102018 005 204
- DE-U1- 202021 001 972
- GB-A- 1 261 048
- GB-A- 2 122 726

## Beschreibung

Die Erfindung betrifft eine Sicherheitsvorrichtung.

Durch DE 10 2015 014 797 A1 ist eine Sicherheitsvorrichtung mit einer Anschlussstelle für einen Druckspeicher bekannt, der über diese Anschlussstelle gasseitig mit einer Bersteinrichtung verbunden ist, die mittels eines ansteuerbaren Kraftelements auslösbar im ausgelösten Zustand eine gasseitige Entleerung des Druckspeichers erlaubt.

Als Kraftelement kann dabei ein pyrotechnischer Gegenstand dienen, der bei entsprechend gezündeter Treibladung ein Wandstück eines Gehäuses derart verformt oder zerstört, dass die darin aufgenommene Bersteinrichtung auslöst, oder der die Berstscheibe der Bersteinrichtung mittels eines Betätigungsstiftes zerstört. Dadurch eröffnet sich die Möglichkeit, auf Gefahrensituationen, etwa in einem Brandfall, durch Druckabbau zu reagieren, bevor es zu einem gefährlichen Überdruck, wie durch Überhitzung im Brandfall, kommen kann. Letztendlich wird dabei durch Ansprechen der Sicherheitsvorrichtung der angeschlossene hydraulische Kreislauf mit seinen Komponenten außer Funktion gesetzt.

Die DE 20 2021 001 972 U1 beschreibt eine Sicherheitsvorrichtung, bestehend aus einem Schraubenkörper mit einem einstückig mit ihm verbundenen Schraubenkopf als Drehantriebsteil und mit einem einstückig mit ihm verbundenen Gewinde als Festlegeteil sowie mit einer in einem Kanal des Schraubenkörpers angeordneten Bersteinrichtung.

Weitere Sicherheitsvorrichtungen gehen aus der DE 10 2018 005 204 A1, der CN 201 297 248 Y, der BE 1 007 786 A3, der GB 1 261 048 A und der GB 2 122 726 A hervor.

Ausgehend von diesem Stand der Technik liegt der Erfindung die Aufgabe zugrunde, eine vergleichbare Sicherheitsvorrichtung zu schaffen, bei deren Ansprechen der angeschlossene hydraulische Kreislauf mit seinen Komponenten funktionsfähig bleibt.

Eine dahingehende Aufgabe löst eine Sicherheitsvorrichtung mit den Merkmalen des Patentanspruches 1 in seiner Gesamtheit.

Die Sicherheitsvorrichtung, bestehend aus einem Schraubenkörper mit einem einstückig mit ihm verbundenen Schraubenkopf als Drehantriebsteil und mit einem einstückig mit ihm verbundenen Gewinde als Festlegeteil sowie mit einer in einem Kanal des Schraubenkörpers angeordneten Bersteinrichtung, wobei ein Schauglas als Inspiziereinrichtung zur Begutachtung des Zustandes der Bersteinrichtung zusammen mit der Bersteinrichtung vollständig im Kanal des Schraubenkörpers aufgenommen ist, stellt sicher, dass bei Überschreiten eines vorgebbaren Druckgrenzwertes die Bersteinrichtung als Sicherheitselement nachgibt, mit der Folge, dass der Kanal der Festlegeeinrichtung sich mit Fluid füllt, bis die der Bersteinrichtung gegenüberliegend angebrachte Inspiziereinrichtung "anspricht" und den Versagensfall meldet. Dergestalt lässt sich mit relativ einfachen Mitteln feststellen, dass im hydraulischen Kreislauf mit seinen angeschlossenen Komponenten, beispielsweise ein für die Hydraulikventile unter Umständen schädlicher Überdruck aufgetreten ist, der in Folge die Bersteinrichtung zum Bersten gebracht hat, und die Inspiziereinrichtung gibt dem Bediener respektive dem Wartungspersonal dann einen Hinweis auf die aufgetretene nicht erwünschte Überdruck- oder Überlastsituation, ohne jedoch die Funktion der angeschlossenen Hydraulik außer Kraft zu setzen oder sonst wie zu beeinträchtigen. Die Hülle für die Berst- und Inspiziereinrichtung ist aus einem Stück gefertigt, insbesondere aus einem Metallwerkstoff, und damit hochfest. Insoweit kommt es zu keinen Dichtigkeitsproblemen mit dem Auftreten von unerwünschten Leckagen. Auch lässt sich die Sicherheitsvorrichtung dauerhaft in oder an Drittbaukomponenten festlegen, wie Ventilblöcken, Fluid-Anschlusskörpern etc.

Bei einer bevorzugten Ausführungsform der erfindungsgemäßen Sicherheitsvorrichtung ist vorgesehen, dass die Bersteinrichtung eine Berstscheibe aufweist, die als eigenständiges Bauteil im Kanal des Schraubenkörpers mit diesem fest verbunden ist, insbesondere entlang einer Außenumfangslinie der Berstscheibe fest verschweißt ist. Die Berstscheibe besteht regelmäßig aus einer dünnwandigen Metallmembran, auch aus korrosionsbeständigem Edelstahlmaterial, deren Membrandicke derart gewählt ist, dass bei einem vorgebbaren Überdruck-Schwellenwert die Membran respektive die Berstscheibe versagt. Aufgrund der linienförmigen Verbindungsnaht ist die Berstscheibe vergleichbar einer Schwingungsmembran randseitig festgelegt und dergestalt als eine Art Freischwinger konzipiert, was die Berstscheibe bei entsprechend auftretenden Druckbelastungen, auch in Form von Schwingungen, entlastet.

Da die Inspiziereinrichtung aus einem Schauglas gebildet ist, erlaubt dieses, durch eine einfache optische Kontrolle festzustellen, ob die Bersteinrichtung versagt hat, indem eben über die geborstene Berstscheibe Hydraulikmedium in den Kanal der Festlegeeinrichtung eintritt, was optisch über das Schauglas von außen her feststellbar ist. Da häufig das Hydraulikfluid eingefärbt ist, beispielsweise eine rote Einfärbung aufweist, lässt sich optisch der Versagensfall auch bei schwierigen Umgebungslichtverhältnissen zutreffend feststellen.

Nicht erfindungsgemäß, könnte die Inspiziereinrichtung an sich auch aus einem Ultraschall-Detektor gebildet sein oder eine kapazitive Messeinrichtung beinhalten oder eine Sensorik zur elektrischen Leitfähigkeitsbestimmung aufweisen; allein die dahingehenden Inspizier- oder Detektiereinrichtungen benötigen für die Auswertung und die Informationsweitergabe elektrischen Strom, was aus Sicherheitsaspekten heraus in Zusammenwirken mit dem brennbaren Hydraulikmedium nicht immer als vorteilhaft angesehen wird, so dass die elektrisch stromfreie, optische Inspizierung in jedem Fall dahingehend gestiegenen Sicherheitsanforderungen gerecht wird. Insbesondere ist die erfindungsgemäße Sicherheitsvorrichtung derart eigenstabil, dass keine zusätzlichen Abströmkanäle auf der Gehäuseseite benötigt werden. Insbesondere ist die erfindungsgemäße Sicherheitsvorrichtung derart eigenstabil, dass keine zusätzlichen Abströmkanäle auf der Gehäuseseite benötigt werden. Dies hat so keine Entsprechung im Stand der Technik. Die Berstscheibe geht nahezu nahtlos in die Festlegeeinrichtung über und ist dergestalt mit der Festlegeeinrichtung sicher verankert, um dergestalt in druckdichter Weise den Eintrittskanal zu überspannen.

Für eine besonders sichere Funktion hat es sich als günstig erwiesen, wenn die Berstscheibe innenseitig ein freies Ende des Kanals überspannt, das einem Gewindeauslauf benachbart ist, der auf der dem Schraubenkopf abgewandten Seite des Schraubenkörpers angeordnet ist. Vorzugsweise ist die Berstscheibe ausgehend von ihrer Festlegestelle im Kanal des Schraubenkörpers mit einer Wölbung versehen, die in Richtung des Schauglases vorsteht. Dergestalt ist für den Berstfall eine sichere Fluidführung in Richtung des vertieften Vorsprunges mit vergleichmäßigter Krafteinleitung gewährleistet, so dass der Versagensfall sicher gerechnet werden kann und die Berstscheibe bei genau definierten Grenzwerten nachgibt respektive versagt.

Bevorzugt ist ferner vorgesehen, dass der Kanal durch eine hohlzylindrische Ausnehmung im Schraubenkörper gebildet ist, die im Durchmesser gleichbleibend den Schraubenkörper vollständig durchgreift und an seinen freien, einander gegenüberliegenden Enden in die Umgebung ausmündet. Der Durchmesser der Berstscheibe und der Durchmesser des Schauglases, das vorzugsweise zylindrisch ausgebildet ist, sind gleich. Aufgrund des konstanten Kanaldurchmessers können sich innerhalb des Kanals nicht ungewollt Druckspitzen aufbauen, die sich im Versagensfall nachteilig auswirken könnten.

Bei einer besonders bevorzugten Ausführungsform ist vorgesehen, dass das Schauglas als massiver Zylinder ausgebildet im eingesetzten Zustand im Kanal bündig mit der Oberseite des Schraubenkopfes abschließt und eine Einsatzlänge im Kanal derart aufweist, dass das Schauglas in fiktiver Verlängerung bündig in der Höhe einer (Unter)Seite des Schraubenkopfes abschließt, die benachbart gegenüberliegend ist zu einem weiteren Auslauf des Gewindes. Hierdurch ergibt sich ein in sich geschlossener Körper mit symmetrischem Aufbau und homogener Druckverteilung im Schadensfall.

Bei einer weiteren bevorzugten Ausführungsform der erfindungsgemäßen Sicherheitsvorrichtung ist vorgesehen, dass das Schauglas aus einem Glaswerkstoff gebildet ist, wie beispielsweise einem Verbund-Sicherheitsglas, einem Natron-Kalkglas, einem Borosilikatglas, einer Glaskeramik, einem Quarz- oder Saphirglas. Die Auswahl an möglichen Glaswerkstoffen ermöglicht für die jeweilige Anwendung das Schauglas hinsichtlich Druckbeständigkeit, Temperaturbeständigkeit, Durchsichtigkeit sowie Materialbeständigkeit gegenüber den in Hydraulikkreisläufen auftretenden Flüssigkeiten und/oder Gasen gezielt auszuwählen. Insbesondere lassen sich die genannten Glasarten an ihren freiliegenden Stirnseiten für eine verbesserte Optik schleifen und vorzugsweise zwischenzeitlich auch polieren. Störende Kratzer und Unebenheiten sind insoweit dann eliminiert und eine optisch ansprechende und im Bedarfsfall leicht zu reinigende Oberfläche ist geschaffen. Dergestalt ist die Verwendung des Schauglases wartungsfrei und erlaubt eine sichere optische Inspizierung des Kanalinneren innerhalb der Festlegeeinrichtung. Ferner lässt sich das Schauglas mit optischen Eigenschaften versehen, wie mit einer Vergrößerung, einer Vergütung und/oder prismatischen Eigenschaften. Als besonders vorteilhaft hat sich im Übrigen die Verwendung von Borosilikatglas in diesem Zusammenhang erwiesen.

Bei einer weiteren besonders bevorzugten Ausführungsform der erfindungsgemäßen Sicherheitsvorrichtung ist vorgesehen, dass die Festlegeeinrichtung aus einem Metallwerkstoff gebildet ist, wie beispielsweise aus einem korrosionsbeständigen Edelstahl, der den Glaswerkstoff umfasst, die beide im Rahmen der Herstellung gemeinsam auf eine Temperatur erhitzt werden, bei der der Glaswerkstoff flüssig ist und an den Metallwerkstoff unter Anlage mit demselben anläuft, so dass bei anschließender Abkühlung der Glaswerkstoff innerhalb des Kanals der Festlegeeinrichtung erstarrt und vom Metallwerkstoff der Festlegeeinrichtung ringförmig eingespannt ist. Dergestalt ist ein fluiddichter Einbau des Schauglases in die Festlegeeinrichtung erreicht, wobei eine kraftschlüssige Verbindung zwischen dem Glaswerkstoff des Schauglases und dem Metallwerkstoff der Festlegeeinrichtung ausgebildet ist. Durch die mechanische Vorspannung verhält sich ein derart metallverschmolzenes Schauglas wie ein zäher Werkstoff und weist gegenüber ansonsten einem thermisch vorgespannten Schauglas eine erhöhte Sicherheit auf.

Das jeweilige Schauglas ist in der Art einer Insertlösung in einem Schraubeinsatz integriert und dahingehende Schraubeinsätze lassen sich in standardisierter Bauweise in großer Stückzahl herstellen und können insoweit auch nachträglich in bereits bestehende, ausgelieferte Hydraulikanlagen als Nachrüstsatz bedarfsweise eingesetzt werden.

Als besonders funktionssicher hat es sich erwiesen, dass das Schauglas bündig mit der Oberseite des Angriffteils abschließt, wobei das Schauglas als massiver, druckdichter Zylinder ausgebildet eine Eingriffstiefe in dem Kanal aufweist, die gleich groß oder größer ist als der Durchmesser des Schauglases. Dergestalt ist eine besonders druckdichte Verankerung des Schauglases im Einschraubteil gewährleistet.

Für eine funktionssichere Inspektion ist die freie Länge des Kanals in dem Einschraubteil größer oder gleich der Länge des Außengewindes des Einschraubteils gewählt, das den hohlzylindrisch ausgestalteten Kanal konzentrisch umgibt, der nach Versagen der Berstscheibe das Hydraulikmedium bis zur Anlage mit der Unterseite des Schauglases aufnimmt und insoweit an das Schauglas als der optischen Inspiziereinrichtung den Versagensfall meldet.

Gegenstand der Erfindung ist auch ein Hydraulikbauteil, vorzugsweise als Komponente einer Gesamt-Hydraulikanlage, das ein Gehäuse aufweist, in dem mindestens ein druckführender Fluidkanal verläuft, wobei die vorstehend vorgestellte Sicherheitsvorrichtung in dem Bauteilgehäuse druckdicht festgelegt eine fluidführende Verbindung zwischen der Bersteinrichtung und dem druckführenden Kanal in dem Gehäuse derart herstellt, dass bei Überschreiten eines sicherheitskritischen Schwellen-Druckwertes im Fluidkanal die Bersteinrichtung nachgibt und demgemäß in die Sicherheitsvorrichtung eingebrachtes Fluid von der Inspiziereinrichtung, insbesondere in Form des Schauglases, feststellbar ist, so dass dergestalt ein Überlastfall unmittelbar detektierbar ist, der auch aus einem Versagensfall bestehen kann.

**Im** Folgenden wird die Sicherheitsvorrichtung anhand eines Ausführungsbeispieles nach der Zeichnung näher erläutert. Dabei zeigen in prinzipieller und nicht maßstäblicher Darstellung die
- Fig. 1: eine perspektivische Draufsicht auf die Sicherheitsvorrichtung als Ganzes;
- Fig. 2: einen Längsschnitt durch die Sicherheitsvorrichtung nach der Fig. 1;
- Fig. 3: eine perspektivische Draufsicht auf ein Hydraulikbauteil mit von der Oberseite her eingesetzter Sicherheitsvorrichtung nach den Fig. 1 und 2; und
- Fig. 4: einen Längsschnitt durch das Hydraulikbauteil nach der Fig. 3.

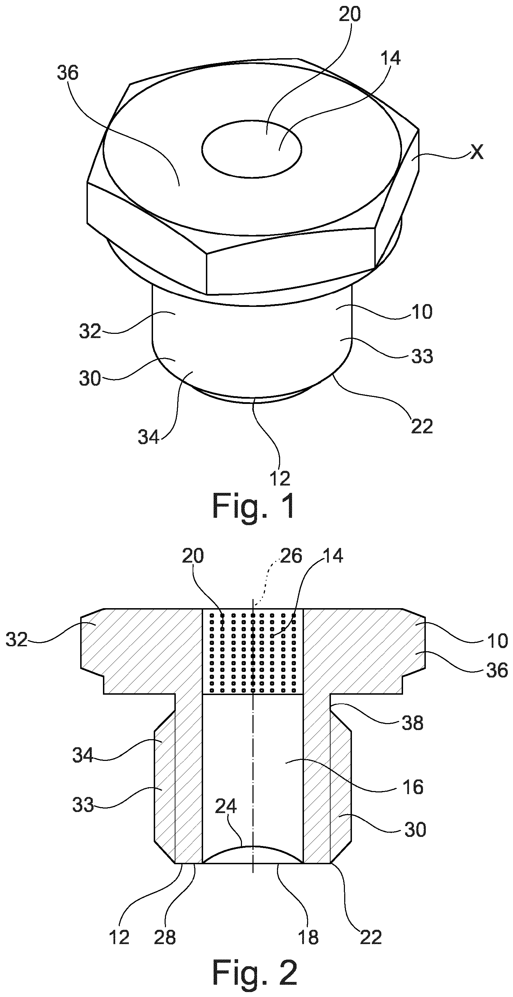

Fig. 1 zeigt die Sicherheitsvorrichtung in einer perspektivischen Ansicht als Ganzes. Die Sicherheitsvorrichtung weist eine Festlegeeinrichtung in Form eines Schraubenkörpers 10 auf mit einer Bersteinrichtung 12, die in Blickrichtung auf die Fig. 1 gesehen am unteren Ende der Festlegeeinrichtung angeordnet ist. Die Festlegeeinrichtung weist zusätzlich eine Inspiziereinrichtung 14 auf ihrer Oberseite auf. Wie insbesondere die Längsschnittdarstellung nach der Fig. 2 zeigt, ist innerhalb des Schraubenkörpers 10 ein rohrförmiger Kanal 16 vorhanden, der in Blickrichtung auf die Fig. 2 gesehen auf seiner Unterseite von der Bersteinrichtung 12 und auf seiner Oberseite von der Inspiziereinrichtung 14 begrenzt ist, die insoweit mit einem vorgebbaren axialen Abstand voneinander angeordnet sind. Der Schraubenkörper 10 besteht aus einem mit ihm einstückig verbundenen Schraubenkopf 36 als Drehantriebsteil für den Angriff eines nicht näher dargestellten Betätigungswerkzeugs. Ferner weist der Schraubenkörper 10 ein einstückig mit ihm verbundenes Gewinde 30 als Festlegeteil für den Einbau in ein Gehäuse 42 auf.

Die Bersteinrichtung 12 ist eine ringförmige Berstscheibe 18 und die Inspiziereinrichtung 14 ist aus einem stopfenartigen Schauglas 20 gebildet, welches in den Kanal 16 nach außen hin bündig eingesetzt ist. Die ringförmige Berstscheibe 18 ist an einem freien stirnseitigen Ende des Kanals 16 an der Festlegeeinrichtung festgelegt, vorzugsweise entlang einer ringförmigen Verbindungsstelle 22 entsprechend angeschweißt. Des Weiteren weist die Berstscheibe 18 einen von außen nach innen konvex verlaufenden Vorsprung als Wölbung 24 auf, der symmetrisch zu einer Längsachse 26 der Festlegeeinrichtung in den Kanal 26 hineinragt, wobei der Vorsprung respektive die Wölbung 24 randseitig bündig mit der freien Stirnseite des Kanals 16 abschließt und dergestalt einstückig in die plane Anlagefläche 28 der Bersteinrichtung 12 übergeht, die gemäß der Darstellung nach der Fig. 2 in einer horizontalen Ebene quer zur Längsachse 26 verläuft.

Der Vorsprung ist letztendlich der Teil der Bersteinrichtung 12 der im Überlast- oder Versagensfall der berstende Bestandteil ist. An der Stelle der ringförmigen Schweißnaht 22 mündet die Anlagefläche 28 der Berstscheibe 18 in eine nach oben hin sich anschließende Gewindestrecke 30 aus, so dass die Festlegeeinrichtung als Ganzes in der Art einer Festlegeschraube 32 ausgebildet ist mit der Gewindestrecke 30 als dem eigentlichen Einschraubteil 33 in Form eines Außengewindes 34, welches in der Fig. 1 der Einfachheit halber nicht detailliert wiedergegeben ist. Des Weiteren weist die Festlegeschraube 32 im Anschluss an das Einschraubteil 33 kopfseitig ein Angriffteil 36 auf in Form eines Sechskants, das dem Angriff eines nicht näher dargestellten Montagewerkzeuges dient, wie beispielsweise einem von der Nenngröße her passenden Schraubenschlüssel. Wie bei solchen Festlegeschrauben 32 üblich, steht das kopfseitige Angriffteil 36 außenumfangsseitig über das fußseitige Einschraubteil 33 vor. In Richtung des Angriffteils 36 mündet die Gewindestrecke 30 respektive das Außengewinde 34 in eine Umfangsnut 38 aus, die der Aufnahme eines Dichtmittels dient, beispielsweise in Form eines Kupferdichtringes (nicht dargestellt). Der Schraubenkörper 10 ist in Kompaktbauweise ausgeführt, d. h., die Nennweite des Schraubenkopfes 36 entspricht im Wesentlichen der Gesamtbauhöhe der Festlegeschraube 32, so dass eine Art kubischer Aufbau entsteht, der besonders hohen Drücken standhalten kann.

Das Schauglas 20 besteht aus einem Glaswerkstoff, vorzugsweise aus Borosilikatglas, wobei für die Herstellung der Verbindung zwischen Schauglas 20 und dem Metallwerkstoff des Schraubenkörpers 10 sowohl der Glaswerkstoff als auch der Metallwerkstoff gemeinsam auf eine Temperatur erhitzt werden, bei der der Glaswerkstoff flüssig ist und an den Metallwerkstoff des Schraubenkörpers 10 unter Anlage mit demselben anläuft, so dass bei anschließender Abkühlung der Glaswerkstoff innerhalb des Kanals 16 des Schraubenkörpers 10 erstarrt und definiert vom Metallwerkstoff ringförmig eingespannt und derart definiert festgelegt ist. Wie sich des Weiteren aus den Fig. 1 und 2 ergibt, schließt das Schauglas 20 bündig mit der Oberseite des Angriffteils 36 ab und das Schauglas 20 ist als massiver Glaszylinder konzipiert und weist eine Eingriffstiefe in dem Kanal 16 auf, die etwas größer ist als der freie Durchmesser des Schauglases 20.

Damit der Schraubenkörper 10 entsprechend nach Bersten der Bersteinrichtung 12 Fluid aufnehmen kann, ist die freie Länge des Kanals 16 in paralleler Richtung zur Längsachse 26 gesehen in dem Einschraubteil 33 größer gewählt als die außenliegende Länge des Außengewindes 34 des Einschraubteils 33, das insoweit den hohlzylindrisch ausgestalteten Kanal 16 konzentrisch umgibt.

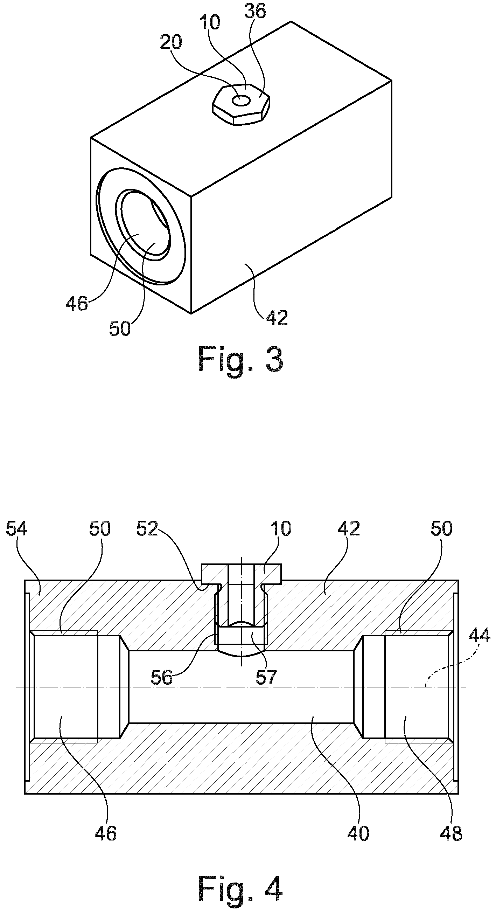

Die vorstehend erläuterte Sicherheitsvorrichtung eignet sich besonders für den Einbau in Hydraulikbauteilen jedweder Art, die mit mindestens einem druckführenden Fluidkanal 40 versehen sind. Exemplarisch und der einfacheren Darstellung wegen ist ein solches Hydraulikbauteil in den Fig. 3 und 4 als quaderförmiges Gehäuse 42 wiedergegeben, entlang dessen Längsachse 44 der Fluidkanal 40 verläuft. Das Gehäuse 42 kann über zwei Fluidanschlussstellen verfügen, beispielsweise in Form eines Fluideingangs 46 und eines Fluidausgangs 48. Sowohl Eingang 46 als auch Ausgang 48 sind mit einem Innengewinde 50 versehen, das jeweils den Anschluss einer nicht näher dargestellten Verrohrung eines hydraulischen Kreislaufes mit Hydraulikkomponenten ermöglicht, wie beispielsweise einer Druckversorgungspumpe, einem Hydrospeicher, einer Ventileinrichtung, einem hydraulischen Verbraucher, wie einem Aktuator etc.

Wie sich des Weiteren aus den Fig. 3 und 4 ergibt, ist an zentraler, mittiger Stelle auf dem Gehäuse 42 die Sicherheitsvorrichtung mit dem Schraubenkörper 10 angebracht, wobei das Angriffteil 36 bündig in eine Ausnehmung 52 auf der Oberseite des Gehäuses 42 teilweise einschraubbar ist. Das als Einschraubteil 33 konzipierte Sicherheitsvorrichtungs-Bauteil wird mit seinem Außengewinde 34 in ein zugehöriges Innengewinde 56 in der oberen Gehäusewand 54 des Gehäuses 42 eingeschraubt, wobei das Innengewinde 56 eine längere Gewindestrecke ausbildet als das zugehörige Außengewinde 34 der Festlegeeinrichtung. Insbesondere ist das untere Ende der Festlegeeinrichtung mit der Berstscheibe 18 in radialer Richtung gesehen, quer zur Längsachse 44 gegenüber dem Fluidkanal 40 etwas zurückversetzt in der oberen Gehäusewand 54 aufgenommen. Dabei stützt sich die Unterseite des Schraubenkopfes 36 unmittelbar an der Gehäusewand 54 ab, was zu einer sicheren Verankerung des Schraubenkörpers 10 im Gehäuse 54 mit beiträgt.

Kommt es nun im Fluidkanal 40 zu einem unerwünschten Fluid-Druckanstieg, der beispielsweise ausreichen kann, eine angeschlossene Ventileinrichtung (nicht dargestellt), wie ein Druckbegrenzungsventil, eventuell zu schädigen, gibt die Berstscheibe 18 durch Bersten respektive durch Einreißen nach und der Kanal 16 füllt sich mit Fluid, beispielsweise in Form eines eingefärbten Hydraulikmediums, wie Getriebeöl. Im Rahmen eines vorgesehenen Inspektionsintervalls kann dann eine Bedienperson respektive das Wartungspersonal durch optische Kontrolle am Schauglas 20 feststellen, dass der Kanal 16 mit Fluid vollgelaufen ist, was ja nur der Fall sein kann, wenn die Berstscheibe 18 nachgegeben hat und diese wiederum nur nachgibt, wenn im System ein unzulässig hoher Druckanstieg gegebenenfalls auch nur kurzfristig vorhanden war. Im dahingehenden Meldefall kann dann entschieden werden, ob man die Ventileinrichtung einer näheren Überprüfung unterzieht oder diese gleich tauscht. Eine dahingehende Überprüfung mit Sicherheitsvorrichtungen im Stand der Technik ist demgegenüber derart nicht möglich.

## Patentansprüche

1. Sicherheitsvorrichtung, bestehend aus einem Schraubenkörper (10) mit einem einstückig mit ihm verbundenen Schraubenkopf (36) als Drehantriebsteil und mit einem einstückig mit ihm verbundenen Gewinde (30) als Festlegeteil sowie mit einer in einem Kanal (16) des Schraubenkörpers (10) angeordneten Bersteinrichtung (12), **dadurch gekennzeichnet, dass** ein Schauglas (20) als Inspiziereinrichtung (14) zur Begutachtung des Zustandes der Bersteinrichtung (12) zusammen mit der Bersteinrichtung (12) vollständig im Kanal (16) des Schraubenkörpers (10) aufgenommen ist.

2. Sicherheitsvorrichtung nach Anspruch 1, **dadurch gekennzeichnet, dass** die Bersteinrichtung (12) eine Berstscheibe (18) aufweist, die als eigenständiges Bauteil im Kanal (16) des Schraubenkörpers (10) mit diesem fest verbunden ist, insbesondere entlang einer Außenumfangslinie der Berstscheibe (18) fest verschweißt ist.

3. Sicherheitsvorrichtung nach Anspruch 2, **dadurch gekennzeichnet, dass** die Berstscheibe (18) innenseitig ein freies Ende des Kanals (16) überspannt, das einem Gewindeauslauf benachbart ist, der auf der dem Schraubenkopf (36) abgewandten Seite des Schraubenkörpers (10) angeordnet ist.

4. Sicherheitsvorrichtung nach Anspruch 2 oder 3, **dadurch gekennzeichnet, dass** die Berstscheibe (18) ausgehend von ihrer Festlegestelle im Kanal (16) des Schraubenkörpers (10) mit einer Wölbung (24) versehen ist, die in Richtung des Schauglases (20) vorsteht.

5. Sicherheitsvorrichtung nach einem der vorstehenden Ansprüche, **dadurch gekennzeichnet, dass** der Kanal (16) durch eine hohlzylindrische Ausnehmung im Schraubenkörper (10) gebildet ist, die im Durchmesser gleichbleibend den Schraubenkörper (10) vollständig durchgreift und an seinen freien, einander gegenüberliegenden Enden in die Umgebung ausmündet.

6. Sicherheitsvorrichtung nach einem der Ansprüche 2 bis 5, **dadurch gekennzeichnet, dass** der Durchmesser der Berstscheibe (18) und der Durchmesser des Schauglases (20), das vorzugsweise zylindrisch ausgebildet ist, gleich sind.

7. Sicherheitsvorrichtung nach einem der vorstehenden Ansprüche, **dadurch gekennzeichnet, dass** das Schauglas (20) als massiver Zylinder ausgebildet im eingesetzten Zustand im Kanal (16) bündig mit der Oberseite des Schraubenkopfes (36) abschließt und eine Einsatzlänge im Kanal (16) derart aufweist, dass das Schauglas in fiktiver Verlängerung bündig in der Höhe einer (Unter)Seite des Schraubenkopfes (36) abschließt, die benachbart gegenüberliegend ist zu einem weiteren Auslauf des Gewindes (30).

8. Sicherheitsvorrichtung nach einem der vorstehenden Ansprüche, **dadurch gekennzeichnet, dass** der Schraubenkörper (10) aus einem Metallwerkstoff gebildet ist, der den Glaswerkstoff des Schauglases (20) umfasst, die gemeinsam auf eine Temperatur erhitzt sind, bei der der Glaswerkstoff flüssig oder pastös ist und an den Metallwerkstoff unter Anlage mit demselben anläuft, so dass bei anschließender Abkühlung der Glaswerkstoff innerhalb des Kanals (16) des Schraubenkörpers (10) erstarrt und vom Metallwerkstoff ringförmig eingespannt ist.

9. Sicherheitsvorrichtung nach einem der vorstehenden Ansprüche, **dadurch gekennzeichnet, dass** das Schauglas (20) aus einem Glaswerkstoff, wie
- einem Verbund-Sicherheitsglas,
- einem Natron-Kalkglas,
- einem Borosilikatglas,
- einer Glaskeramik,
- einem Quarz- oder Saphirglas
gebildet ist.

10. Hydraulikbauteil mit einem Gehäuse (42), in dem mindestens ein druckführender Fluidkanal (40) verläuft und mit einer Sicherheitsvorrichtung nach einem der vorstehenden Ansprüche, die in dem Gehäuse (42) druckdicht festgelegt und mit ihrem Schraubenkopf (36) auf dem Gehäuse (42) anliegend eine fluidführende Verbindung (57) zwischen der Bersteinrichtung (12) und dem druckführenden Kanal (16) derart herstellt, dass bei Überschreiten eines sicherheitskritischen Schwellen-Druckwertes im Fluidkanal (16) die Bersteinrichtung (12) nachgibt und in die Sicherheitsvorrichtung eingebrachtes Fluid durch das Schauglas (20) feststellbar ist.

## Claims

1. Safety device consisting of a screw body (10) having a screw head (36), which is connected to the screw body in one piece and forms a rotary-drive part, and having a thread (30), which is connected thereto in one piece and forms a securing part, and also having a rupture device (12), which is arranged in a channel (16) of the screw body (10), **characterised in that** a sight glass (20) is accommodated entirely within the channel (16) of the screw body (10), together with the rupture device (12), and forms an inspecting device (14) for assessing the state of the rupture device (12).

2. Safety device according to claim 1, **characterised in that** the rupture device (12) comprises a rupture disc (18), which is securely connected to the screw body (10) in a channel (16) thereof as an independent component, in particular securely welded along an outer circumferential line of the rupture disc (18).

3. Safety device according to claim 2, **characterised in that** the rupture disc (18) spans a free end of the channel (16) on the inside, said end being adjacent to a thread runout, which is arranged on the side of the screw body (10) facing away from the screw head (36).

4. Safety device according to either claim 2 or claim 3, **characterised in that** the rupture disc (18) is furnished with a curvature (24) originating from the securing point of said rupture disc in the channel (16) of the screw body (10), said curvature protruding in the direction of the sight glass (20).

5. Safety device according to any of the preceding claims, **characterised in that** the channel (16) is formed by a hollow cylindrical recess in the screw body (10), which passes completely through the screw body (10), retaining the same diameter, and emerging into the environment at its free ends which are opposite one another.

6. Safety device according to any of claims 2 to 5, **characterised in that** the diameter of the rupture disc (18) and the diameter of the sight glass (20), which is preferably designed to be cylindrical, are identical.

7. Safety device according to any of the preceding claims, **characterised in that** the sight glass (20) is designed as a solid cylinder and, when inserted in the channel (16), ends flush with the upper side of the screw head (36) and has an insertion length in the channel (16) such that the sight glass, in a notional extension, ends flush at the level of a (lower) side of the screw head (36) which is adjacent to and opposite a further runout of the thread (30).

8. Safety device according to any of the preceding claims, **characterised in that** the screw body (10) is formed of a metallic material, which surrounds the glass material of the sight glass (20), which, together, are heated to a temperature at which the glass material is liquid or paste-like and runs onto the metallic material in contact with said material such that, when it subsequently cools down, the glass material sets inside the channel (16) of the screw body (10) and is clamped by the metallic material in an annular manner.

9. Safety device according to any of the preceding claims, **characterised in that** the sight glass (20) is formed of a glass material, such as
- a laminated safety glass,
- a soda-lime glass,
- a borosilicate glass,
- a glass ceramic,
- a quartz or sapphire glass.

10. Hydraulic component having a housing (42) in which at least one pressurised fluid channel (40) runs and having a safety device according to any of the preceding claims, which is secured in a pressure-tight manner in the housing (42) and, lying on the housing (42) with its screw head (36), establishes a fluid-conveying connection (57) between the rupture device (12) and the pressurised channel (16) such that, if a safety-critical threshold pressure value in the fluid channel (16) is exceeded, the rupture device (12) yields and fluid passed into the safety device can be ascertained through the sight glass (20).

## Revendications

1. Dispositif de sécurité, constitué d'un corps (10) de vis ayant une tête (36) de vis, qui y est relié d'une seule pièce comme partie d'entraînement en rotation et ayant un filet (30), qui y est relié d'une seule pièce comme partie fixe, ainsi qu'un dispositif (12) d'éclatement disposé dans un canal (16) du corps (10) de la vis, **caractérisé en ce qu'**un hublot (20), comme dispositif (14) de contrôle pour l'expertise de l'état du dispositif (12) d'éclatement, est logé ensemble avec le dispositif (12) d'éclatement complètement dans le canal (16) du corps (10) de la vis.

2. Dispositif de sécurité suivant la revendication 1, **caractérisé en ce que** le dispositif (12) d'éclatement a un disque (18) de rupture, qui en tant que pièce indépendante est reliée dans le canal (16) du corps (10) de la vis fixement à celui-ci, en étant en particulier soudé de manière fixe le long d'une ligne de contour extérieur du disque (18) de rupture.

3. Dispositif de sécurité suivant la revendication 2, **caractérisé en ce que** le disque (18) de rupture recouvre, du côté intérieur une extrémité libre du canal (16), qui est voisine d'une sortie du filet, qui est disposée du côté, non tourné vers la tête (36) de la vis, du corps (10) de la vis.

4. Dispositif de sécurité suivant la revendication 2 ou 3, **caractérisé en ce que** le disque (18) de rupture est, à partir de son point de fixation dans le canal (16) du corps (10) de la vis, pourvu d'une voussure (24), qui s'avance en direction du hublot (20).

5. Dispositif de sécurité suivant l'une des revendications précédentes, **caractérisé en ce que** le canal (16) est formé d'un évidement cylindrique creux dans le corps (10) de la vis qui, en diamètre restant constant et à ses extrémités libres opposées l'une à l'autre, traverse complémentairement le corps (10) de la vis et débouche dans l'environnement.

6. Dispositif de sécurité suivant l'une des revendications 2 à 5, **caractérisé en ce que** le diamètre du disque (18) de rupture et le diamètre du hublot (20), qui est constitué de préférence de manière cylindrique, sont égaux.

7. Dispositif de sécurité suivant l'une des revendications précédentes, **caractérisé en ce que** le hublot (20) constitué sous la forme d'un cylindre plein est, à l'état inséré dans le canal (16), à affleurement avec la face supérieure de la tête (36) de la vis et a une longueur d'insertion dans le canal (16), de manière à ce que le hublot soit en prolongement fictif à affleurement avec le niveau d'une face (inférieure) de la tête (36) de la vis, qui est opposée en étant voisine d'une autre sortie du filet (30).

8. Dispositif de sécurité suivant l'une des revendications précédentes, **caractérisé en ce que** le corps (10) de la vis est en un matériau métallique, qui entoure le matériau en verre du hublot (20), qui sont portés conjointement à une température à laquelle le matériau en verre est liquide ou poreux et courre sur le matériau métallique avec contact avec celui-ci, de sorte que, lors d'un refroidissement venant ensuite, le matériau en verre se solidifie à l'intérieur du canal (16) du corps (10) de la vis et est serré annulairement par le matériau métallique.

9. Dispositif de sécurité suivant l'une des revendications précédentes, **caractérisé en ce que** le hublot (20) est en un matériau en verre, comme
- un verre de sécurité composite,
- un verre silico-sodo-calcique,
- un verre au borosilicate,
- une céramique vitreuse,
- un verre de quartz ou de saphir.

10. Pièce hydraulique comprenant un boîtier (42), dans lequel s'étend au moins un canal (40) pour du fluide conduisant la pression et comprenant un dispositif de sécurité suivant l'une des revendications précédentes, qui est fixé d'une manière étanche à la pression dans le boîtier (42) et qui, par sa tête (36) de vis s'appliquant au boîtier (42), ménage une communication (57) fluidique entre le dispositif (12) d'éclatement et le canal (16) conduisant la pression, de manière à ce que, si une valeur de pression de seuil critique du point de vue de la sécurité est dépassée dans le canal (16) pour du fluide, le dispositif (12) d'éclatement cède et du fluide introduit dans le dispositif de sécurité peut être constaté par le hublot (20).
